# EUROPÄISCHE PATENTSCHRIFT

(11) **EP 1 572 418 B1**
(45) Veröffentlichungstag und Bekanntmachung des Hinweises auf die Patenterteilung: **23.08.2006**
(21) Anmeldenummer: 03780141.2
(22) Anmeldetag: 09.12.2003
(51) Int. Cl.: B23Q 7/03, B65G 57/18, B65G 57/00, B21D 43/12

(54) **VERFAHREN ZUM F RDERN VON KAROSSERIEBLECHEN EINES FAHRZEUGS UND ENTSPRECHENDE F RDERVORRICHTUNG**
METHOD FOR TRANSPORTING BODYWORK PANELS OF A VEHICLE AND CORRESPONDING TRANSPORT DEVICE
PROCEDE POUR TRANSPORTER DES TOLES DE CARROSSERIE DE VEHICULE ET SYSTEME TRANSPORTEUR CORRESPONDANT

(30) Priorität: 19.12.2002 DE 10259974
(43) Veröffentlichungstag der Anmeldung: 14.09.2005
(73) Patentinhaber: DaimlerChrysler AG, 70567 Stuttgart (DE)
(72) Erfinder: WOLF, Harald, 76571 Gaggenau (DE)
(86) Internationale Anmeldenummer: PCT/EP2003/013919
(87) Internationale Veröffentlichungsnummer: WO 2004/056526

(56) Entgegenhaltungen:
- WO-A-90/00146
- DE-A- 19 826 270
- DE-A- 19 850 964

## Beschreibung

Die Erfindung betrifft ein Verfahren zum Fördern von Karosserieblechen eines Fahrzeugs mittels einer mit einer Mehrzahl an zueinander in Förderrichtung beabstandeten Mitnehmereinheiten versehenen endlosen Fördervorrichtung, gemäß dem Oberbegriff des Anspruchs 1. Ferner bezieht sich die Erfindung auf eine Fördervorrichtung zur Durchführung des Verfahrens, entsprechend dem Oberbegriff des Anspruchs 7.

Verfahren und Fördervorrichtungen der eingangs genannten Art sind bekannt. Aus der DE 198 50 964 A1 ist eine Einrichtung zum Transport von Werkstückteilen bekannt, die zur Gewährleistung einer definierten Auflage der Werkstücke teile-spezifische Schablonen aufweist, auf welche die Werkstücke abgelegt werden können. Bei den Werkstücken handelt es sich insbesondere um Karosseriebleche eines Fahrzeugs.

Es ist Aufgabe der Erfindung, ein Verfahren und eine geeignete Fördervorrichtung vorzuschlagen, die ein betriebsgünstiges Fördern von Karosserieblechen ermöglichen.

Zur Lösung der Aufgabe wird ein Verfahren mit den Merkmalen des Anspruchs 1 vorgeschlagen. Das erfindungsgemäße Verfahren zeichnet sich dadurch aus, dass an mindestens einer Mitnehmereinheit eine zugehörige Blechgruppe gestapelt, die Blechgruppe bis zu einer Blechentnahmestelle gefördert und an der Blechentnahmestelle jeweils ein einzelnes Karosserieblech mittels einer Blechvereinzelungseinrichtung entnommen wird. Aufgrund der Bildung von Blechgruppen ist es möglich, die endlose Fördervorrichtung zusätzlich zu ihrer Transportfunktion als Zwischenspeicher zu nutzen. Hierdurch wird eine betriebsfreundliche und flexible Förderung und Zwischenspeicherung von Karosserieblechen gewährleistet. Somit erlaubt das Verfahren die Integration von zwei ansonsten konstruktiv und funktionell voneinander vollständig getrennten Vorrichtungen (Fördervorrichtung, Speichervorrichtung) zu einer multifunktionellen Konstruktionseinheit. Die Zwischenspeicherkapazität der Fördervorrichtung kann unter anderem durch die vorgebbare Anzahl an Mitnehmereinheiten beeinflusst werden.

Mit Vorteil werden die Karosseriebleche einer jeweiligen Blechgruppe an einer Blechgruppenformationsstelle in der Mitnehmereinheit hochkantgestapelt angeordnet. Durch das Hochkantstapeln der Karosseriebleche kann die in Förderrichtung beanspruchte Stapellänge variabel an die jeweils zu erfüllende Förder- und/oder Zwischenspeicheraufgabe angepasst werden. Dabei können die Mitnehmereinheiten gegebenenfalls auch Blechgruppen mit unterschiedlicher Anzahl an Karosserieblechen fördern beziehungsweise zwischenspeichern.

Die Blechgruppe wird in der Mitnehmereinheit vorzugsweise mittels sukzessiven Ablegens einzelner Karosseriebleche aufgebaut. Dabei können die einzelnen Karosseriebleche manuell oder automatisiert in der Mitnehmereinheit unter Ausbildung der Blechgruppe abgelegt werden. Hierdurch ist es möglich, die Zwischenspeicherkapazität der Fördervorrichtung an die jeweils vorliegende Förderbetriebssituation anzupassen. Somit kann bei einem verhältnismäßig geringen Bedarf an Karosserieblechen eine maximale Speicherkapazität der Fördervorrichtung genutzt werden, da ausreichend Zeit zur Blechgruppenformation zur Verfügung steht und deshalb die Mitnehmereinheiten jeweils mit einer maximalen Anzahl an Karosserieblechen belegt werden können. Demgegenüber wird bei größeren Transportgeschwindigkeiten der Fördervorrichtung die jeweilige Mitnehmereinheitskapazität an aufzunehmenden Karosserieblechen gegebenenfalls nicht maximal ausgenutzt, da nicht genügend Zeit zur Formation einer Blechgruppe maximaler Größe zur Verfügung steht.

Gemäß einer bevorzugten Ausführungsvariante wird die Blechgruppe von der Blechgruppenformationsstelle in eine sich schräg nach oben erstreckende Förderrichtung bis zur Blechentnahmestelle gefördert. Hierdurch ist es möglich, ein verhältnismäßig kleines Bauvolumen sowohl für die Förderfunktion als auch für die Zwischenspeicherfunktion zu nutzen. Bei geeigneter Ausgestaltung der Mitnehmereinheiten kann bei schräg nach oben verlaufender Förderrichtung eine Autozentrierung einer jeweiligen Blechgruppe innerhalb der Fördervorrichtung erzielt werden. Die Blechgruppenformationsstelle und die Blechentnahmestelle der Fördervorrichtung befinden sich auf unterschiedlichen Höhenniveaus, sodass die Blechgruppenformationseinrichtung und die Blechvereinzelungseinrichtung zueinander gegebenenfalls unterschiedlich ausgebildet sein können.

Die jeweilige Blechgruppe wird vorteilhaft während eines vorgebbaren Zeittakts mittels der Fördervorrichtung transportiert, wobei der Zeittakt von der erforderlichen Blechvereinzelungszeit einer kompletten, jeweils an der Blechentnahmestelle sich befindenden Blechgruppe abhängt. Die Förder- und Zwischenspeicherfunktionen der Fördervorrichtung sind somit stets aufeinander optimiert abgestimmt, sodass Engpasssituationen in Bezug auf eine hinreichende Blechbereitstellung praktisch ausgeschlossen werden können.

Zur Lösung der Aufgabe wird ferner eine Fördervorrichtung mit den Merkmalen des Anspruchs 7 vorgeschlagen. Die erfindungsgemäße Fördervorrichtung zeichnet sich dadurch aus, dass die jeweilige Mitnehmereinheit mindestens ein im Wesentlichen senkrecht zur Förderrichtung vorstehendes Mitnehmerelement aufweist. Dabei dient das Mitnehmerelement als eine die Mitnehmereinheit begrenzende Anlage für eine zu formierende Blechgruppe.

Mit Vorteil ist das Mitnehmerelement in Förderrichtung und/oder quer zur Förderrichtung lageverstellbar. Ferner kann die Anzahl und/oder die konstruktive Ausbildung der in einer Mitnehmereinheit zum Einsatz kommenden Mitnehmerelemente in Abhängigkeit der geometrischen Form eines Karosserieblechs veränderbar sein. Hierdurch wird eine korrekte und sichere Aufnahme einer Blechgruppe in einer Mitnehmereinheit der Fördervorrichtung gewährleistet, wobei mittels Anpassung der Mitnehmerelemente an die jeweils geometrische Form eines Karosserieblechs unterschiedliche Transportanforderungen mittels der Fördervorrichtung erfüllt werden können.

Gemäß einer bevorzugten Ausführungsform ist die Fördervorrichtung als Kettenfördervorrichtung ausgebildet. Derartige Fördervorrichtungen sind an sich bekannt und eignen sich besonders zur Taktförderung von Werkstücken.

Die Fördervorrichtung ist vorzugsweise als Schrägfördervorrichtung, insbesondere mit einstellbarer Förderrichtung ausgebildet. Eine derartige Fördervorrichtung kann flexibel zur Erfüllung unterschiedlicher Förder- und Zwischenspeicheraufgaben eingesetzt werden.

Die Blechvereinzelungseinrichtung ist vorteilhaft als Blechentnahme-Schwenkgreifer ausgebildet. Dabei kann die Steuerung des Blechentnahme-Schwenkgreifers an das Steuersystem der Fördervorrichtung gekoppelt sein, sodass gegebenenfalls eine zeittaktkonstante Blechentnahme mittels der Blechvereinzelungseinrichtung möglich ist.

Weitere Vorteil der Erfindung ergeben sich aus der Beschreibung.

Die Erfindung wird anhand eines bevorzugten Ausführungsbeispiels unter Bezugnahme auf eine schematische Zeichnung näher erläutert.

Dabei zeigen:
Fig. 1 eine schematische Vorderansicht in Perspektivdarstellung einer erfindungsgemäßen Fördervorrichtung mit einem einzigen Karosserieblech an einer Blechentnahmestelle;
Fig. 2 eine weitere schematische Vorderansicht in Perspektivdarstellung der Fördervorrichtung der Fig. 1 mit mehreren Blechgruppen in zugehörigen Mitnehmereinheiten und
Fig. 3 eine schematische Hinteransicht in Perspektivdarstellung der Fördervorrichtung der Fig. 1 mit einem Blechentnahme-Schwenkgreifer.

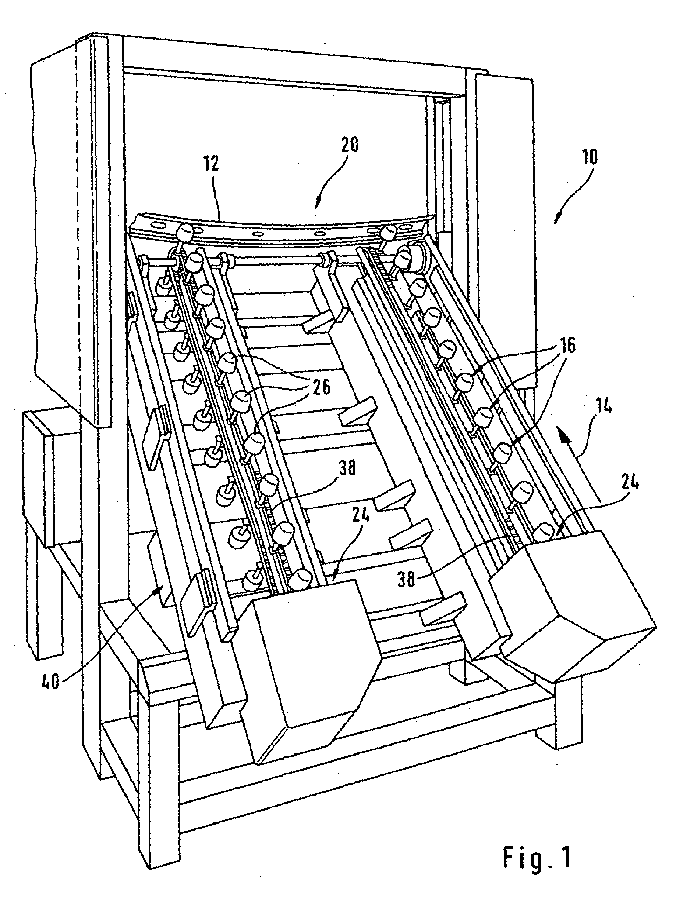

Figur 1 zeigt eine schematische Perspektivdarstellung auf einer Vorderseite einer erfindungsgemäßen Fördervorrichtung 10. Die Fördervorrichtung 10 ist als Schrägfördervorrichtung ausgebildet und dient zum Fördern von Karosserieblechen 12 von einer Blechgruppenformationsstelle 24 in Förderrichtung 14 zu einer Blechentnahmestelle 20. Hierzu weist die Fördervorrichtung 10 eine Mehrzahl an Mitnehmereinheiten 16 auf, die mittels zweier endloser Förderketten 38 in Förderposition entsprechend der Förderrichtung 14 bewegbar sind. Da die Fördervorrichtung 10 als endlose Kettenfördervorrichtung mit einer geeigneten Tragstruktur 40 ausgebildet ist, werden die Mitnehmereinheiten 16 an der Unterseite der Fördervorrichtung 10 von der Blechentnahmestelle 20 entgegengesetzt der Förderrichtung 14 zur Blechgruppenformationsstelle 24 zurückgeführt. Jede Mitnehmereinheit 16 weist zwei zugehörige, zueinander parallel beabstandet angeordnete Mitnehmelemente 26 auf, die zur Bildung einer Blechanlage in Förderposition im Wesentlichen senkrecht zur Förderrichtung 14 nach außen vorstehen.

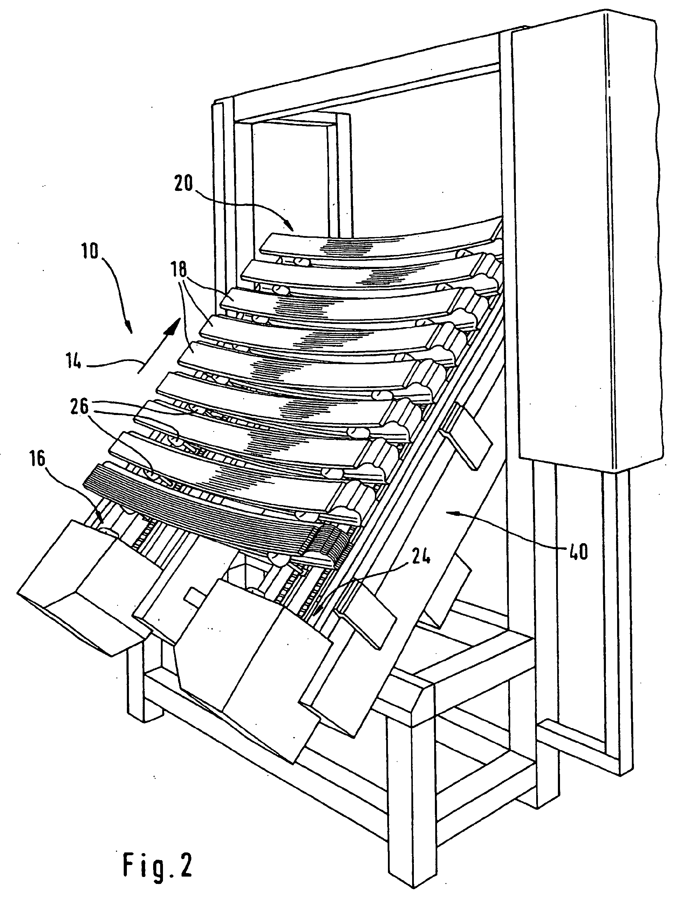

Figur 2 zeigt in schematischer Perspektivdarstellung eine weitere Vorderansicht der Fördervorrichtung 10 der Fig.1, wobei nun in einer Mehrzahl der Mitnehmereinheiten 16 jeweils eine Blechgruppe 18 bestehend aus zueinander anliegenden Karosserieblechen 12 angeordnet ist. Die sich an der Blechgruppenformationsstelle 24 befindende Mitnehmereinheit 16 ist gemäß Fig. 2 noch leer, das heißt noch nicht mit Karosserieblechen 12 belegt, sodass in dieser Mitnehmereinheit 16 zusätzliche Karosseriebleche 12 beispielsweise manuell eingelegt werden können. Die jeweilige Blechgruppe 18 ist hochkant in der zugehörigen Mitnehmereinheit 16 derart aufgenommen, dass das in Förderrichtung 14 gesehen hintere Karosserieblech 12 auf den zwei parallel angeordneten Mitnehmerelementen 26 der Mitnehmereinheit 16 anliegt und von selbigen sicher gehalten wird. Die jeweilige Blechgruppe 18 wird dabei zusätzlich von einer ortsfesten, beispielsweise in Form einer Gleitbahn, oder gemäß der Förderkette 38 in Förderrichtung 14 bewegbaren Auflageeinheit der Tragstruktur 40 der gestützt. Die Bildung einer jeweiligen Blechgruppe 18 an der Blechgruppenformationsstelle 24 kann dabei manuell oder gegebenenfalls automatisiert mittels Einlegen einzelner Karosseriebleche 12 beziehungsweise Gruppen von Karosserieblechen 12 erfolgen.

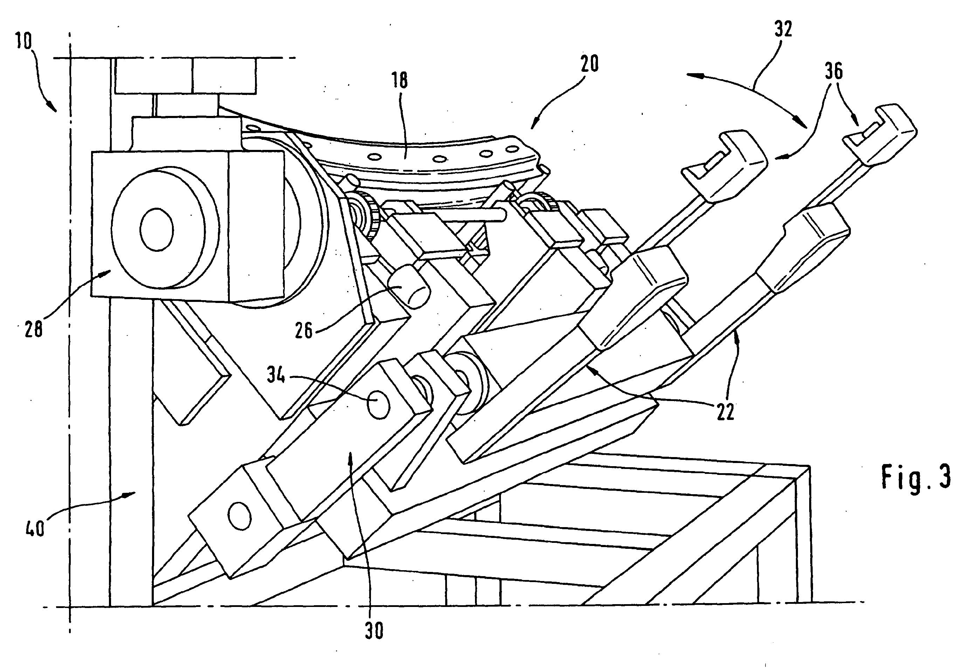

Figur 3 zeigt in schematischer Perspektivdarstellung eine Hinteransicht der Fördervorrichtung der Figur 1 beziehungsweise der Figur 2. Die Fördervorrichtung 10 ist mit einer Blechvereinzelungseinrichtung 22 in Form eines Blechentnahme-Schwenkgreifers versehen. Die Blechvereinzelungseinrichtung 22 wird mittels eines Antriebsaggregats 30 betrieben und ist gemäß Doppelpfeil 32 um eine Schwenkachse 34 relativ zu der Blechentnahmestelle 20 beziehungsweise zu einer nicht dargestellten Blechablagestelle bewegbar. Zum Überführen eines jeweiligen Karosserieblechs 12 von der Blechentnahmestelle 20 der Fördervorrichtung 10 zu einer Blechablagestelle einer weiteren Station ist die Blechvereinzelungseinrichtung 22 mit einem geeigneten Blechgreifersystem 36 versehen. Die Förderbewegung der Fördervorrichtung 10 zum Positionieren einer jeweiligen Blechgruppe 18 in der Blechentnahmestelle 20 wird mittels eines Antriebsaggregats 28 kontrolliert ausgelöst.

Die Mitnehmerelemente 26 der Fördervorrichtung 10 sind in Förderrichtung 14 und quer zur Förderrichtung 14 lagerverstellbar, sodass in Abhängigkeit der geometrischen Form der Karosseriebleche 12 eine jeweilige Blechgruppe 18 lagestabil von den Mitnehmerelementen 26 einer entsprechenden Mitnehmereinheit 16 in einer definierten Förderposition gehalten wird. Auch ist die Tragstruktur 40 der Fördervorrichtung 10 derart verstellbar, dass eine Veränderung der Förderrichtung 14 beziehungsweise eines sich entsprechend ergebenden Förderanstellwinkels möglich ist. Die Fördervorrichtung 10 wird zeittaktweise betrieben, wobei die Zeittaktdauer von der Blechvereinzelungszeit beziehungsweise von der Blechgruppenformationszeit abhängt.

Die Fördervorrichtung 10 ermöglicht eine Pufferung und Bereitstellung von Karosserieblechen 12 in verhältnismäßig großer Stückzahl. Die Stapelhöhe einer jeweiligen Blechgruppe 18 richtet sich dabei nach der Stapelbarkeit der Karosseriebleche und ist durch die Anzahl an vorgesehenen Mitnehmerelementen 26, die mit einer zugehörigen Förderkette 38 antriebsverbunden sind, beeinflussbar. Zum Fördern und Zwischenspeichern von relativ schlecht stapelbaren Karosserieblechen 12 werden somit mehr Mitnehmerelemente 26 vorgesehen, als bei verhältnismäßig gut stapelbaren Karosserieblechen 12. Die Fördervorrichtung 10 erlaubt die Nutzung einer erheblich verbesserten Zwischenspeicherkapazität gegenüber traditionellen Fördervorrichtungen, wobei gleichzeitig der Platzbedarf für eine erfindungsgemäße Fördervorrichtung 10 relativ gering ist. Hierdurch ergeben sich auch erhebliche Kosteneinsparungen für den Betreiber der Fördervorrichtung 10.

Der weitere konstruktive Aufbau und die weitere Funktionsweise der Fördervorrichtung 10 sind an sich bekannt, sodass auf eine diesbezüglich detailliertere Beschreibung verzichtet wird.

## Patentansprüche

1. Verfahren zum Fördern von Karosserieblechen (12) eines Fahrzeugs mittels einer mit einer Mehrzahl an zueinander in Förderrichtung (14) beabstandeten Mitnehmereinheiten (16) versehenen endlosen Fördervorrichtung (10),
**dadurch gekennzeichnet,**
**dass** an mindestens einer Mitnehmereinheit (16) eine zugehörige Blechgruppe (18) gestapelt, die Blechgruppe (18) bis zu einer Blechentnahmestelle (20) gefördert und an der Blechentnahmestelle (20) jeweils ein einzelnes Karosserieblech (12) mittels einer Blechvereinzelungseinrichtung (22) entnommen wird.

2. Verfahren nach Anspruch 1,
**dadurch gekennzeichnet,**
**dass** die Karosseriebleche (12) einer jeweiligen Blechgruppe (18) an einer Blechgruppenformationsstelle (24) in der Mitnehmereinheit (16) hochkantgestapelt angeordnet werden.

3. Verfahren nach Anspruch 1 oder 2,
**dadurch gekennzeichnet,**
**dass** die Blechgruppe (18) in der Mitnehmereinheit (16) mittels sukzessiven Ablegens einzelner Karosseriebleche (12) aufgebaut wird.

4. Verfahren nach Anspruch 3,
**dadurch gekennzeichnet,**
**dass** die einzelnen Karosseriebleche (12) manuell oder automatisiert in der Mitnehmereinheit (16) unter Ausbildung der Blechgruppe (18) abgelegt werden.

5. Verfahren nach einem der Ansprüche 2 bis 4,
**dadurch gekennzeichnet,**
**dass** die Blechgruppe (18) von der Blechgruppenformationsstelle (24) in eine sich schräg nach oben erstreckende Förderrichtung (14) bis zur Blechentnahmestelle (20) gefördert wird.

6. Verfahren nach einem der vorhergehenden Ansprüche,
**dadurch gekennzeichnet,**
**dass** die jeweilige Blechgruppe (18) während eines vorgebbaren Zeittakts mittels der Fördervorrichtung (10) transportiert wird, wobei der Zeittakt von der erforderlichen Blechvereinzelungszeit einer kompletten, jeweils an der Blechentnahmestelle (20) sich befindenden Blechgruppe (18) abhängt.

7. Fördervorrichtung (10) zur Durchführung des Verfahrens zum Fördern von Karosserieblechen (12) eines Fahrzeugs gemäß einem der vorhergehenden Ansprüche, wobei die Fördervorrichtung (10) endlos und mit einer Mehrzahl an zueinander in Förderrichtung (14) beabstandeten Mitnehmereinheiten (16) versehenen ist und die jeweilige Mitnehmereinheit (16) mindestens ein im Wesentlichen senkrecht zur Förderrichtung (14) vorstehendes Mitnehmerelement (26) aufweist,
**dadurch gekennzeichnet,**
**dass** an mindestens einer Mitnehmereinheit (16) eine zugehörige Blechgruppe (18) stapelbar, die Blechgruppe (18) bis zu einer Blechentnahmestelle (20) förderbar und an der Blechentnahmestelle (20) jeweils ein einzelnes Karosserieblech (12) mittels einer Blechvereinzelungseinrichtung (22) entnehmbar ist, und dass die Fördervorrichtung (10) eine Schrägfördervorrichtung ist.

8. Fördervorrichtung nach Anspruch 7,
**dadurch gekennzeichnet,**
**dass** das Mitnehmerelement (26) in Förderrichtung (14) lageverstellbar ist.

9. Fördervorrichtung nach Anspruch 7 oder 8,
**dadurch gekennzeichnet,**
**dass** das Mitnehmerelement (26) quer zur Förderrichtung (14) lageverstellbar ist.

10. Fördervorrichtung nach einem der Ansprüche 7 bis 9,
**dadurch gekennzeichnet,**
**dass** die Anzahl und/oder die konstruktive Ausbildung der in einer Mitnehmereinheit (16) zum Einsatz kommenden Mitnehmerelemente (26) in Abhängigkeit der geometrischen Form eines Karosserieblechs (12) veränderbar ist.

11. Fördervorrichtung nach einem der Ansprüche 7 bis 10,
**dadurch gekennzeichnet,**
**dass** sie als Kettenfördervorrichtung ausgebildet ist.

12. Fördervorrichtung nach einem der Ansprüche 7 bis 11,
**dadurch gekennzeichnet,**
**dass** sie eine Schrägfördervorrichtung insbesondere mit einstellbarer Förderrichtung (14) ist.

13. Fördervorrichtung nach einem der Ansprüche 7 bis 12,
**dadurch gekennzeichnet,**
**dass** die Blechvereinzelungseinrichtung (22) als Blechentnahme-Schwenkgreifer ausgebildet ist.

## Claims

1. Method for transporting bodywork panels (12) of a vehicle by means of an endless transport device (10), equipped with a plurality of carrier units (16) that are spaced at intervals in the transport direction (14), **characterized in that** an associated group (18) of panels is stacked on at least one carrier unit (16), the group (18) of panels is transported as far as a panel removal station (20) and in each case an individual bodywork panel (12) is removed by a panel separation device (22).

2. Method according to Claim 1, **characterized in that** the bodywork panels (12) of a respective group (18) of panels are arranged stacked on edge in the carrier unit (16) at a panel group formation station (24).

3. Method according to Claim 1 or 2, **characterized in that** the group (18) of panels in the carrier unit (16) is built up by means of the successive deposition of individual bodywork panels (12).

4. Method according to Claim 3, **characterized in that** the individual bodywork panels (12) are deposited in the carrier unit (16) manually or in an automated manner, forming the group (18) of panels.

5. Method according to one of Claims 2 to 4, **characterized in that** the group (18) of panels is transported from the panel group formation station (24) as far as the panel removal station (20) in a transport direction (14) that extends obliquely upwards.

6. Method according to one of the preceding claims, **characterized in that** the respective group (18) of panels is transported by means of the transport device (10) during a predefinable cycle time, the cycle time depending on the required panel separation time of a complete group (18) of panels respectively located at the panel removal station (20).

7. Transport device (10) for implementing the method for transporting bodywork panels (12) of a vehicle according to one of the preceding claims, the transport device (10) being endless and provided with a plurality of carrier units (16) that are spaced at intervals in the transport direction (14), and the respective carrier unit (16) having at least one carrier element (26) projecting substantially at right angles to the transport direction (14), **characterized in that** an associated group (18) of panels can be stacked on at least one carrier unit (16), the group (18) of panels can be transported as far as a panel removal station (20) and in each case an individual bodywork panel (12) can be removed by a panel separation device (22) at the panel removal station (20), and **in that** the transport device (10) is an inclined transport device.

8. Transport device according to Claim 7, **characterized in that** the position of the carrier element (26) can be adjusted in the transport direction (14).

9. Transport device according to Claim 7 or 8, **characterized in that** the position of the carrier element (26) can be adjusted transversely with respect to the transport direction (14).

10. Transport device according to one of Claims 7 to 9, **characterized in that** the number and/or the design construction of the carrier elements (26) used in a carrier unit (16) can be varied as a function of the geometric shape of a bodywork panel (12).

11. Transport device according to one of Claims 7 to 10, **characterized in that** it is constructed as a chain transport device.

12. Transport device according to one of Claims 7 to 11, **characterized in that** it is an inclined transport device, in particular with an adjustable transport direction (14).

13. Transport device according to one of Claims 7 to 12, **characterized in that** the panel separation device (22) is constructed as a panel removal pivoting gripper.

## Revendications

1. Procédé de transport de tôles de carrosserie automobile (12) d'un véhicule au moyen d'un dispositif de transport sans fin (10) muni d'une pluralité d'unités d'entraînement (16) à distance les unes des autres dans la direction de transport (14),
**caractérisé en ce qu'**un groupe de tôles associé (18) est empilé sur au moins une unité d'entraînement (16), le groupe de tôles (18) est transporté jusqu'à un lieu de prélèvement des tôles (20) et au lieu de prélèvement des tôles (20) respectivement une tôle de carrosserie automobile séparée (12) est prélevée au moyen d'une installation de séparation des tôles (22).

2. Procédé selon la revendication 1,
**caractérisé en ce que** les tôles de carrosserie automobile (12) d'un groupe de tôles respectif (18) sont disposées de manière à être empilées sur chant à un poste de formation de groupes de tôles (24) dans l'unité d'entraînement (16).

3. Procédé selon la revendication 1 ou 2,
**caractérisé en ce que** le groupe de tôles (18) est constitué dans l'unité d'entraînement (16) au moyen d'un dépôt successif de tôles de carrosserie automobile (12) séparées.

4. Procédé selon la revendication 3,
**caractérisé en ce que** les tôles de carrosserie automobile séparées (12) sont déposées manuellement ou automatiquement dans l'unité d'entraînement (16) pendant la formation du groupe de tôles (18).

5. Procédé selon l'une quelconque des revendications 2 à 4,
**caractérisé en ce que** le groupe de tôles (18) est transporté du poste de formation des groupes de tôles (24) dans une direction de transport (14) s'étendant en diagonale vers le haut, jusqu'au lieu de prélèvement des tôles (20).

6. Procédé selon l'une quelconque des revendications précédentes,
**caractérisé en ce que** le groupe de tôles respectif (18) est transporté pendant un signal de rythme prescrit au moyen du dispositif de transport (10), le signal de rythme étant fonction du temps de séparation des tôles nécessaire d'un groupe de tôles (18) complet se trouvant respectivement au lieu de prélèvement des tôles (20).

7. Dispositif de transport (10) permettant la réalisation du procédé de transport de tôles de carrosserie automobile (12) d'un véhicule selon l'une quelconque des revendications précédentes, dans lequel le dispositif de transport (10) est sans fin et muni d'une pluralité d'unités d'entraînement à distance les unes des autres dans la direction de transport (14) et l'unité de transport respective (16) présente au moins un élément d'entraînement (26) sensiblement perpendiculaire à la direction de transport (14),
**caractérisé en ce qu'**un groupe de tôles associé (18) peut être empilé sur au moins une unité d'entraînement (16), le groupe de tôles (18) peut être transporté jusqu'à un lieu de prélèvement des tôles (20) et respectivement une tôle de carrosserie automobile séparée (12) peut être prélevée au lieu de prélèvement des tôles (20) au moyen d'une installation de séparation des tôles (22), et **en ce que** le dispositif de transport (10) est un dispositif de transport oblique.

8. Dispositif de transport selon la revendication 7,
**caractérisé en ce qu'**on peut régler la position de l'élément d'entraînement (26) dans la direction de transport (14).

9. Dispositif de transport selon la revendication 7 ou 8,
**caractérisé en ce qu'**on peut régler la position de l'élément d'entraînement (26) transversalement à la direction de transport (14).

10. Dispositif de transport selon l'une quelconque des revendications 7 à 9,
**caractérisé en ce que** le nombre et/ou la formation constructive des éléments d'entraînement (26) utilisés dans une unité d'entraînement (16) peuvent être changés en fonction de la forme géométrique d'une tôle de carrosserie automobile (12).

11. Dispositif de transport selon l'une quelconque des revendications 7 à 10,
**caractérisé en ce qu'**il est conçu sous forme de dispositif de transport à chaînes.

12. Dispositif de transport selon l'une quelconque des revendications 7 à 11,
**caractérisé en ce qu'**il s'agit d'un dispositif de transport oblique notamment avec une direction de transport réglable (14).

13. Dispositif de transport selon l'une quelconque des revendications 7 à 12,
**caractérisé en ce que** l'installation de séparation des tôles (22) est conçue sous la forme de pinces pivotantes de prélèvement des tôles.
